(19) Europäisches Patentamt
European Patent Office
Office européen des brevets

(11) **EP 2 530 372 A1**

(12) **EUROPÄISCHE PATENTANMELDUNG**

(43) Veröffentlichungstag:
**05.12.2012 Patentblatt 2012/49**

(51) Int Cl.:
*F21S 8/12* (2006.01)    *F21S 8/10* (2006.01)
*G02B 6/00* (2006.01)

(21) Anmeldenummer: **11168130.0**

(22) Anmeldetag: **30.05.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Odelo GmbH**
**71409 Schwaikheim (DE)**

(72) Erfinder:
• **Vollmer, Marco**
  **71332 Waiblingen (DE)**
• **Deger, Rüdiger**
  **73329 Kuchen/Fils (DE)**

(74) Vertreter: **Benninger, Johannes**
**Benninger & Eichler-Stahlberg**
**Patentanwälte**
**Dr.-Leo-Ritter-Strasse 5**
**93049 Regensburg (DE)**

(54) **Lichtleiterbauelement für Kraftfahrzeugleuchte**

(57)    Es wird ein Lichtleiterelement (01) für eine Kraftfahrzeugleuchte mit mindestens einer Lichteinkoppelpartie (02) und mindestens einer von der Lichteinkoppelpartie (02) verschiedenen Lichtauskoppelpartie (03) beschrieben. Das Lichtleiterelement (01) umfasst mindestens eine im Strahlengang (S) des Lichts zwischen mindestens einer Lichteinkoppelpartie (02) und mindestens einer Lichtauskoppelpartie (03) vorgesehene und in und entgegen zumindest einer Lichtausbreitungsrichtung (L1, L2, L3) durch wenigstens eine erste optische Grenzfläche (05) und zumindest eine zweite optische Grenzfläche (06) zwischen dem Material des Lichtleiterelements (01) und einem die Aussparung einnehmenden Stoff begrenzte Aussparung (04, 12) zur Lichtlenkung. An mindestens einer Lichteinkoppelpartie (02) eingestrahltes Licht wird in dessen Strahlengang (S) zu mindestens einer Lichtauskoppelpartie (03) zumindest an wenigstens einer ersten optischen Grenzfläche (05) und an zumindest einer zweiten optischen Grenzfläche (06) gebrochen.

Fig. 1

**Beschreibung**

Die Erfindung betrifft ein Lichtleiterbauelement für eine Kraftfahrzeugleuchte gemäß dem Oberbegriff des Anspruchs 1.

Jede Kraftfahrzeugleuchte erfüllt je nach Ausgestaltung eine oder mehrere Aufgaben bzw. Funktionen, zu deren Erfüllung je mindestens eine Lichtfunktion der Kraftfahrzeugleuchte vorgesehen ist. Jede Lichtfunktion muss dabei eine gesetzlich vorgegebene Lichtverteilung in einer oder mehreren Grundrichtungen erfüllen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine Kraftfahrzeugleuchte umfasst im Wesentlichen einen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Kraftfahrzeugleuchte. In dem Leuchteninnenraum kann mindestens ein hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Wenigstens einer Lichtquelle des Leuchtmittels können ein oder mehrere zur Ausformung einer definierten Abstrahlcharakteristik benötigte Optikelemente zur Lichtlenkung zugeordnet sein. Die definierte Abstrahlcharakteristik sieht dabei meist in einer oder mehreren Grundrichtungen einer gewünschten, die gesetzlichen Vorgaben für die jeweilige Lichtfunktion erfüllenden Lichtverteilung kollimiertes Licht vor, welches dann ausgehend von den Grundrichtungen in bestimmte Raumwinkel mit vorgegebener Intensität gestreut wird. Die Optikelemente dienen dabei zur Lichtlenkung in eine oder mehrere Grundrichtungen.

Bei solchen Optikelementen kann es sich um mindestens eine Linse, ein oder mehrere Lichtleiterelemente, mindestens einen Rinnenkonzentrator, z.B. mindestens eine Parabolrinne (CPC; Compound Parabolic Concentrator) oder dergleichen handeln.

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um aus der im Strahlengang von der Lichtquelle her kommend gesehen zuvor erzeugten definierten Abstrahlcharakteristik eine eine gewünschte und/oder gesetzlich vorgegebene Lichtverteilung für mindestens eine Lichtfunktionen erfüllende Streuung mit vorgegebener Intensität zu erzeugen.

Die Lichtscheibe ist durch eine transparente Abdeckung gebildet, welche den Leuchteninnenraum abschließt und die darin beherbergten Bauteile, wie etwa einen oder mehrere Leuchtmittel, Reflektoren sowie alternativ oder zusätzlich Optikelemente zur Ausformung einer definierten Abstrahlcharakteristik, gegen Witterungseinflüsse schützt.

Die Lichtscheibe kann vorzugsweise an deren Innenseite mit einer zur Erzeugung der zuvor erwähnten Streuung vorgesehenen optischen Struktur versehen sein. Hierdurch kann gegebenenfalls auf eine Optikscheibe verzichtet werden.

Das Leuchtengehäuse bzw. der Leuchteninnenraum kann in mehrere Kammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere Kammern gleiche oder jede Kammer eine andere Lichtfunktionen erfüllen kann.

Als Lichtquellen kommen in Kraftfahrzeugleuchten unter anderem wegen ihres geringen Stromverbrauchs und geringen Bauraumbedarfs vermehrt auch Leuchtdioden zum Einsatz. Diese bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln besonders kompakte Kraftfahrzeugleuchten verwirklicht werden, die an fast jede nur erdenkliche Einbausituation angepasst sein können.

Die ein Verhältnis des in einer gewünschten Lichtverteilung aus einer Kraftfahrzeugleuchte austretenden und einer Lichtfunktion zugeordneten Lichts zu dem von der oder den zur Erfüllung der Lichtfunktion vorgesehenen Lichtquellen ausgestrahlten Lichts widerspiegelnde optische Güte ist unter Anderem abhängig von der Genauigkeit der relativen Ausrichtung der zur Erzeugung der gewünschten Lichtverteilung benötigten, im Strahlengang von der mindestens einen Lichtquelle bis zum Austritt aus der Kraftfahrzeugleuchte durch die Lichtscheibe hindurch angeordneten optischen Bauteile, wie etwa Reflektoren und/oder Optikelemente und/oder Optikscheiben und/oder an der Lichtscheibe vorgesehene optische Strukturen. Die optische Güte ist beispielsweise um so geringer, je ungenauer die zur Erzielung der gewünschten Lichtverteilung benötigten Bauteile beginnend bei der Lichtquelle relativ zueinander ausgerichtet sind.

Einen weiteren Einfluss hat die Anzahl an optischen Übergängen im Strahlengang zwischen Medien mit unterschiedlichem optischem Brechungsindex. Flächen, an denen optische Übergänge zwischen Medien mit unterschiedlichem optischem Brechungsindex stattfinden, werden als optische Grenzflächen bezeichnet.

Bislang wurden zur Erzeugung einer gewünschten Lichtverteilung ein oder mehrere Optikelemente zur Bündelung und Umlenkung des von einer Lichtquelle ausgestrahlten Lichts in Kombination mit einer oder mehreren mit speziellen optischen Strukturen versehener Optikscheiben und/oder mit einer mit speziellen optischen Strukturen versehenen Lichtscheibe eingesetzt. Die Ausrichtung der Bauteile zueinander ist bei der lichttechnischen Auslegung und in der Fertigung eine Schwierigkeit.

Zum Erhalt einer hohen optischen Güte ist durch DE 602 05 806 T2 bekannt, einen eine definierte Abstrahlcharakteristik erzeugenden Lichtverteilkörper auf eine Primäroptik einer LED aufzusetzen, wodurch eine genaue Ausrichtung von LED und Lichtverteilkörper erhalten wird.

Zum Erhalt einer hohen optischen Güte ist durch DE 10 2006 034 070 A1 und durch EP 1 881 258 A1 bekannt, einen eine definierte Abstrahlcharakteristik erzeugenden Lichtverteilkörper als Primäroptik unmittelbar an eine LED anzuspritzen, wodurch einerseits eine genaue Ausrichtung von LED und Lichtverteilkörper und andererseits eine Verringerung der Anzahl an optischen Übergängen erhalten wird.

Nachteilig an diesen Lichtverteilkörpern ist, dass sie eine radiale Lichtumlenkung erzeugen, welche zum Erhalt einer gewünschten Lichtverteilung wenigstens eines Optikelements, beispielsweise eines den Lichtverteilkörper teilweise umgebenden Reflektors bedürfen.

Anstelle von oder zusätzlich zu einem oder mehreren der erwähnten Optikelemente werden in Kraftfahrzeugleuchten zunehmend unter dem Begriff Lichtleiterelement zusammengefasste Lichtleiter und/oder lichtleitende Optikkörper zur Lichtlenkung eingesetzt. Diese bestehen aus mindestens einer zur Lichteinkopplung von wenigstens einer Lichtquelle zumindest eines Leuchtmittels vorgesehenen Lichteinkoppelpartie und mindestens einer von der mindestens einen Lichteinkoppelpartie verschiedenen, zur Lichtauskopplung vorgesehenen Lichtauskoppelpartie. Die Lichtführung innerhalb des Lichtleiterelements erfolgt quasi verlustfrei vermittels Totalreflexion (TIR; Total Internal Reflexion). Unter anderem kann hierdurch zumindest zum Teil auf Optikelemente zur Ausformung definierter Abstrahlcharakteristiken verzichtet werden. Hierdurch können innovative Leuchtsignaturen mit kleinem Querschnitt und wenig Bauraumbedarf verwirklicht werden, die mit anderen technischen Lösungen als mit Lichtleiterelementen nur schwer oder gar nicht erhalten werden können.

Als zur Einkopplung von Licht in ein oder mehrere Lichtleiterelemente vorgesehene Lichtquellen sind überwiegend LEDs vorgesehen. Bei der Kombination von Lichtleiterelementen und LEDs können je ein Lichtleiterelement je LED, mehrere LEDs je Lichtleiterelement oder mehrere Lichtleiterelemente je LED zum Einsatz kommen.

Die Lichtleiterelemente weisen dabei den Vorteil auf, dass mit ihnen im Vergleich zu mehreren einzeln oder gruppenweise im Leuchteninnenraum montierten Optikelementen eine Verbesserung der optischen Güte erhalten werden kann. Nachteilig an ihnen ist, dass die bekannten Lichtleiterelemente nach wie vor zumindest Optikscheiben und/oder an der Lichtscheibe vorgesehene optische Strukturen benötigen, um eine gewünschte Lichtverteilung zu erhalten. Hierdurch ist die optische Güte nach wie vor eingeschränkt.

Eine Aufgabe der Erfindung ist ein Lichtleiterelement für eine Kraftfahrzeugleuchte zu entwickeln, mit dem eine besonders hohe optische Güte der Kraftfahrzeugleuchte erzielt wird und mit dem die Herstellungskosten einer Kraftfahrzeugleuchte gesenkt werden.

Die Aufgabe wird gelöst mit den Merkmalen des unabhängigen Anspruchs.

Demnach ist ein Lichtleiterelement für eine Kraftfahrzeugleuchte vorgesehen, mit mindestens einer zur Lichteinkopplung von wenigstens einer Lichtquelle zumindest eines Leuchtmittels ausgestrahlten Lichts vorgesehenen Lichteinkoppelpartie und mindestens einer von der Lichteinkoppelpartie verschiedenen, zur Lichtauskopplung vorzugsweise in einer gewünschten Lichtverteilung vorgesehenen Lichtauskoppelpartie.

Das aus einem Teil bestehende Lichtleiterelement enthält mindestens eine im Strahlengang des Lichts zwischen mindestens einer Lichteinkoppelpartie und mindestens einer Lichtauskoppelpartie vorgesehene Aussparung zur Lichtlenkung. Die mindestens eine Aussparung ist dabei sowohl in als auch entgegen zumindest einer Lichtausbreitungsrichtung im Lichtleiterelement durch dieses begrenzt. Die Begrenzung der Ausnehmung wenigstens in und entgegen der zumindest einen Lichtausbreitungsrichtung im Lichtleiterelement umfasst wenigstens je eine optische Grenzfläche zwischen dem Material des Lichtleiterelements und einem die Aussparung einnehmenden Stoff. Die optischen Grenzflächen werden durch Oberflächen des Lichtleiterelements gebildet, welche die Aussparung begrenzen. Das von mindestens einer Lichtquelle an zumindest eine Einkoppelpartie in das Lichtleiterelement eingestrahlte Licht wird in dessen Strahlengang zur Lichtauskoppelpartie zumindest beim Übergang aus dem Lichtleiterelement in die Aussparung an einer ersten optischen Grenzfläche und beim Übergang aus der Aussparung in das Lichtleiterelement an einer zweiten optischen Grenzfläche gebrochen wird, bevor es beim Austritt aus dem Lichtleiterelement an der Lichtauskoppelpartie vorzugsweise noch einmal gebrochen wird.

Durch diese Verkettung von Lichtbrechungen können im Vergleich zum Stand der Technik mit nur einem Bauteil größere Winkelbereiche erzielt und damit größere, zur Einhaltung einer gewünschten Lichtverteilung erforderliche Raumwinkelbereiche abgedeckt werden. Dadurch wird die Erzeugung einer gewünschten Lichtverteilung frei von dem Lichtleiterelement nachgeschalteten Optikelementen oder optischen Strukturen ermöglicht. Hierdurch werden gesondert herzustellende und zu montierende Bauteile eingespart, so dass insgesamt der Herstellungs- und Montageaufwand sowie damit einhergehend der Kostenaufwand einer mit einem solchen Lichtleiterelement ausgestatteten Kraftfahrzeugleuchte im Vergleich zum Stand der Technik verringert werden kann. Durch die einstückige Ausführung des Lichtleiterelements wird darüber hinaus eine besonders hohe und im Vergleich zum Stand der Technik wesentlich höhere optische Güte erreicht, unter Anderem, da die optischen Grenzflächen wegen der einstückigen Ausgestaltung besonders exakt zueinander ausgerichtet sind. Auch ist eine Justierung der einzelnen optischen Grenzflächen relativ zueinander nicht erforderlich, da das Lichtleiterelement einen einstückigen Optikkörper bildet. Somit werden auch keine gesonderten Werkzeuge zur Herstellung von z. B. Zusatz-Optikscheiben benötigt.

Die Lichtführung innerhalb zumindest eines Teils des verbleibenden, von der mindestens einen Aussparung verschiedenen bzw. diese zumindest teilweise umgebenden Lichtleiterelements kann quasi verlustfrei vermittels Totalreflexion (TIR; Total Internal Reflexion) erfolgen. Beispielsweise kann an einer mindestens einer Lichtauskoppelpartie gegenüberliegenden Seite ein Keil vorgesehen sein, welches in dessen Richtung gestreutes Licht vermittels Totalreflexion in Richtung der selben oder einer anderen, verschiedenen Lichtauskoppelpartie umlenkt.

Wichtig ist hervorzuheben, dass mehrere Aussparungen zur Vergrößerung des Winkelbereichs vorgesehen sein können.

Im Strahlengang zwischen der ersten optischen Grenzfläche und der zweiten optischen Grenzfläche können eine oder mehrere weitere optische Grenzflächen vorgesehen sein.

Zumindest eine erste und/oder eine zweite optische Grenzfläche kann eine mit einer optischen Struktur versehene, entsprechend geformten Oberfläche aufweisen.

Beispielsweise können die durch mindestens eine Aussparung begrenzenden Oberflächen des Lichtleiterelements gebildeten optischen Grenzflächen mit speziellen Optiken versehen sein, wie z.B. Kissen- oder Walzenoptiken, um eine bestimmte gewünschte Lichtverteilungen zu erhalten bzw. deren Erhalten zu begünstigen.

Innerhalb mindestens einer Aussparung und/oder an wenigstens einer mindestens eine Aussparung begrenzenden optischen Grenzfläche können TIR-Optikkeile angeordnet sein. Hierdurch können ebenfalls größere Winkelbereiche erhalten werden.

Bei dem die Aussparung einnehmenden Stoff handelt es sich bevorzugt um Luft.

Die Aussparung kann von mehreren Seiten vom Lichtleiterelement umgeben sein.

Beispielsweise kann die Aussparung zumindest innerhalb einer die Hauptlichtausbreitungsrichtungen zwischen der mindestens einen Lichteinkoppelpartie und der mindestens einen Lichtauskoppelpartie umfassenden Fläche allseitig vom Lichtleiterelement umschlossen sein.

Mindestens eine Aussparung kann sich in wenigstens einer Richtung ganz durch das Lichtleiterelement hindurch erstrecken. Es ist jedoch auch denkbar, dass sich mindestens eine Aussparung nur über einen Teil einer oder mehrerer Abmessungen des Lichtleiterelements erstreckt. Beispielsweise kann eine mittig im Lichtleiterelement angeordnete Aussparung als ein entlang seiner Längsachse vom Lichtleiterelement umschlossenes Durchgangsloch ausgeführt sein, oder als ein Sackloch. Genauso verhält es sich bei einer am Rand angeordneten Aussparung. Diese kann sich beispielsweise über die gesamte oder nur über einen Teil beispielsweise der Dicke des Lichtleiterelements erstrecken.

Die Form der Ausnehmung kann einem beliebig geformten, abschnittsweise senkrechten und/oder schiefen Zylinder mit beliebig geformten gleichen oder verschiedenen Grundflächen sowie veränderlichen oder konstanten entlang der Zylindermittelachse aufeinander folgenden Querschnitten entsprechen. Bei der Zylindermittelachse handelt es sich dabei um eine stetige oder unstetige, abschnittsweise gerade oder gekrümmt verlaufende Kurve, auf der die Mittelpunkte benachbarter Querschnitte liegen.

Als Lichtquellen kommen bevorzugt LEDs bzw. LED-Chips zum Einsatz. Das Lichtleiterelement kann direkt an eine oder mehrere LEDs bzw. LED-Chips angespritzt sein.

Vermittels Erfindung können mehrere beispielsweise nebeneinander angeordnete LEDs zur Lichteinkopplung in das Lichtleiterelement vorgesehen sein, indem beispielsweise in einem Lichtleiterelement aus Polymethylmethacrylat (PMMA) mit einer Brechungszahl n von 1,492 gegenüber Luft mit einer Brechungszahl von 1 vermittels Totalreflexion eine Lichtumlenkung um mindestens 84° erzeugt wird. Es ist ersichtlich, dass der Winkel der Lichtumlenkung bei Totalreflexion abhängig von den Brechungszahlen der beteiligen Medien ist und sich als der doppelte Winkel des Totalreflexionswinkels θc ergibt.

Beispielsweise kann das von einer Lichtquelle ausgestrahlte Licht parallel zu einer Hauptlichtabstrahlrichtung der mindestens einen Lichtauskoppelpartie oder vermittels interner Totalreflexion quer dazu eingestrahlt werden.

Mindestens eine Lichteinkoppelpartie kann hierzu eine ebene Fläche umfassen.

Alternativ oder zusätzlich kann mindestens eine einer Lichtquelle zugeordnete Lichteinkoppelpartie einen Compound Parabolic Concentrator (CPC) umfassen. Dies ist vor allem dann wichtig, wenn das Licht in einem größeren Winkel von beispielsweise 90° gegenüber der Auskoppelrichtung eingestrahlt wird. Bei CPCs wird außerdem Störlicht innerhalb einer Kraftfahrzeugleuchte verringert, da das Licht vorwiegend im Lichtleiterelement bleibt und somit nicht aus anderen Lücken bzw. Fugen der Kraftfahrzeugleuchte und/oder in andere Funktionsbereiche ein- und ausstrahlt. Durch den CPC wird das Licht kollimiert und kann so besser, quasi verlustfrei durch das Lichtleiterelement geführt und ggf. an einer beispielsweise schräggestellten Fläche totalreflektiert werden. Vorteil der Totalreflexion ist unter anderem eine quasi verlustfreie Reflexion des Lichts an der Fläche. Auch kann die eingekoppelte und damit im Optikkörper geführte Lichtmenge gesteigert werden, indem ein in das Lichtleiterelement integriertes CPC zur Einkopplung verwendet wird.

Aus z. B. bauraumtechnischen, thermischen Gründen auf der Platine und/oder des Strakverlaufs kann es nötig sein, dass typischerweise normal auf der Platine aufstehenden und auch in dieser Richtung Licht abstrahlenden LEDs nicht in Richtung einer Hauptlichtabstrahlrichtung der mindestens einen Lichtauskoppelpartie strahlen, beispielsweise weil die Platine nicht in einer hierzu passenden Fläche liegt. In diesem Fall kann mit einem Winkel zur Hauptlichtabstrahlrichtung der mindestens einen Lichtauskoppelpartie in das Lichtleiterelement eingekoppelt werden und das Licht anschließend an einer geneigten Fläche in dem Lichtleiterelement totalreflektiert werden, um das Licht somit vorgelenkt in Richtung des die mindestens eine Auskoppelpartie umfassenden Auskoppelbereichs zu lenken.

Für Winkel unterhalb des Totalreflexionswinkels θc müssen die Flächen beispielsweise durch eine Metallisierung verspiegelt werden. Der Winkel der Totalreflexion lässt sich mit Hilfe des snelliusschen Brechungsgesetzes berechnen zu

$$\theta_c = \arcsin\left(\frac{n_2}{n_1}\right)$$

mit
n1 = Brechzahl optisch dichteres Medium
n2 = Brechzahl optisch dünneres Medium

Es ist ersichtlich, dass die Erfindung durch ein Lichtleiterelement mit mindestens einer Aussparung verwirklicht sein kann, innerhalb dem die Lichtführung mittels quasi verlustfreier Totalreflexion unter Austritt des Lichts aus dem Lichtleiterelement in die Aussparung und Wiedereintritt aus der Aussparung in das Lichtleiterelement erfolgt. Alternativ ist auch ein mit einer oder mehreren unter Freilassung der Einkoppel- und Auskoppelpartien sowie der die Ausnehmung begrenzenden optischen Grenzflächen zumindest teilweise verspiegelten Außenoberflächen versehenes Lichtleiterelement denkbar, welches jedoch kompliziert in der Fertigung und mit einem im Vergleich zur Totalreflexion verminderten optischen Güte behaftet ist. Nachteilig an der alternativen Ausgestaltung vermittels Verspiegelung ist, dass es an z. B. metallisierten Oberflächen zu signifikanten Lichtverlusten bei der Reflexion kommt. Vor allem in der Serienherstellung im Automotivbereich sind Reflexionsgrade von 70 % bis 90 % nicht unüblich. Zum Vergleich hierzu entstehen bei interner Totalreflexion fast keine Verluste, so dass die optische Güte durch Totalreflexion im Vergleich zu einer Verspiegelung nur minimale Einschränkungen erfährt. Die Umlenkung kann auch mithilfe eines Pentaprismas erfolgen. Dieses wäre insensitiv gegenüber Verkippungen, wobei die Winkeltoleranz beim Einfügen des Pentaprismas in das Lichtleiterelement sehr groß ist. Allerdings ist hierbei wenigstens ein zusätzliches Optikteil nötig, dessen Oberflächen ebenfalls beispielsweise durch Teilbedampfen metallisiert oder anderswertig verspiegelt sein müssen, nötig.

Vorteile gegenüber dem Stand der Technik ergeben sich unter anderem durch eine exakte Ausrichtung der durch die Aussparung voneinander abschnittsweise getrennten Partien des Lichtleiterelements einhergehend mit einer besonders hohen optischen Güte. Weitere Vorteile sind Kosteneinsparungen bei der Herstellung, da nur noch ein Bauteil benötigt wird, im Vergleich zu beim Stand der Technik benötigten getrennten Lichtleiterelementen und Optikscheiben. Hierdurch wird nur noch ein Werkzeug zur Herstellung des Lichtleiterelements benötigt, wohingegen beim Stand der Technik zur Herstellung jeden Optikelements und jeder Optikscheibe ein eigenes Werkzeug benötigt wird. Auch ist keine kostenintensive und die optische Güte nachteilig beeinträchtigende Verspiegelung von Oberflächen nötig. Darüber hinaus ergeben sich erhebliche Vereinfachungen bei der Montage, da keine separaten Bauteile mehr getrennt montiert und zueinander ausgerichtet werden müssen.

Zusätzliche Vorteile ergeben sich dadurch, dass die optische Güte durch Toleranzen und/oder Fehler bei der Montage wenn dann nur noch sehr eingeschränkt beeinträchtigt werden kann. Dadurch kommt es auch zu keinen Fehlern beim Betrieb von Kraftfahrzeugleuchten mit unterschiedlichen Lichtfunktionen, bei denen es beim Stand der Technik immer wieder vorkommt, dass eine Lichtfunktion aufgrund fehlerhafter Montage oder Ausrichtung im den Strahlengang von der Lichtquelle bis zum Austritt aus der Lichtscheibe umfassenden optischen System in eine andere Lichtfunktion überstrahlt.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

Fig. 1    ein Lichtleiterelement in einer perspektivischen Ansicht.

Fig. 2    das Lichtleiterelement aus Fig. 1 in einer Seitenansicht mit angedeutetem Strahlengang des Lichts in einer ersten Lichtausbreitungsrichtung im Lichtleiterelement.

Fig. 3    das Lichtleiterelement aus Fig. 1 in einer Draufsicht mit angedeutetem Strahlengang des Lichts in einer zweiten Lichtausbreitungsrichtung im Lichtleiterelement in Fig. 3a) und angedeutetem Strahlengang des Lichts in einer dritten Lichtausbreitungsrichtung im Lichtleiterelement in Fig. 3b).

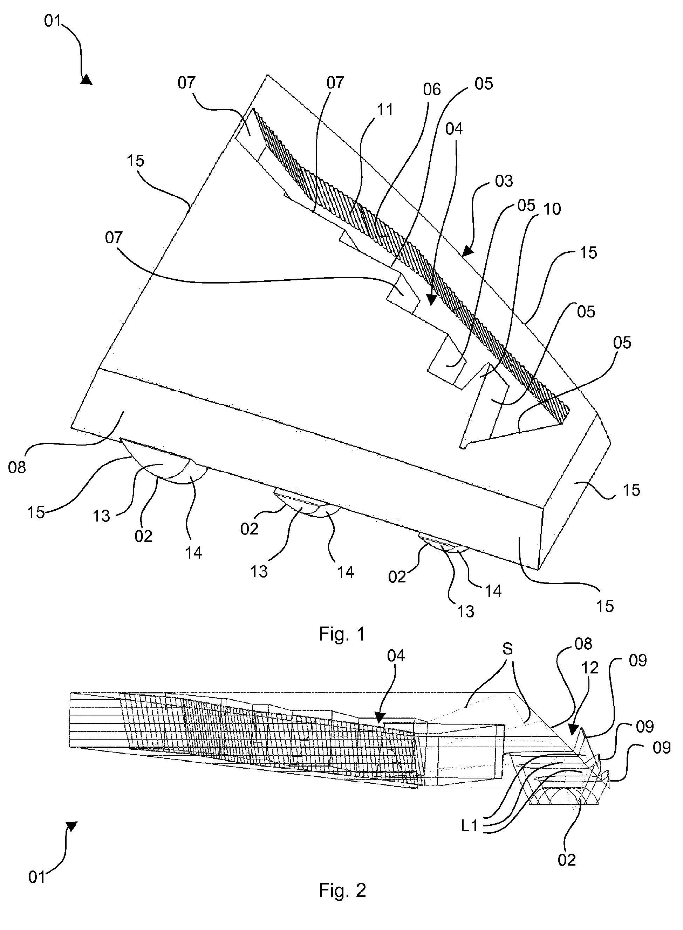

Ein in den Fig. 1 bis Fig. 3 ganz oder in Teilen dargestelltes Lichtleiterelement 01 für eine Kraftfahrzeugleuchte weist mindestens einer zur Lichteinkopplung von wenigstens einer Lichtquelle zumindest eines Leuchtmittels ausgestrahlten Lichts vorgesehenen Lichteinkoppelpartie 02 und mindestens einer von der Lichteinkoppelpartie 02 verschiedene, zur Lichtauskopplung vorzugsweise in einer gewünschten Lichtverteilung vorgesehene Lichtauskoppelpartie 03 auf.

Das aus einem Teil bestehende Lichtleiterelement 01 enthält mindestens eine im Strahlengang S des Lichts zwischen mindestens einer Lichteinkoppelpartie 02 und mindestens einer Lichtauskoppelpartie 03 vorgesehene Aussparung 04 zur Lichtlenkung. Die mindestens eine Aussparung ist dabei sowohl in als auch entgegen zumindest einer Lichtausbreitungsrichtung L1, L2, L3 im Lichtleiterelement 01 durch dieses begrenzt. Die Begrenzung der Ausnehmung wenigstens in und entgegen der zumindest einen Lichtausbreitungsrichtung L1, L2, L3 im Lichtleiterelement 01 umfasst wenigstens je eine optische Grenzfläche 05, 06 zwischen dem Material des Lichtleiterelements 01 und einem die Aussparung 04 einnehmenden Stoff. Die optischen Grenzflächen 05, 06 werden durch Oberflächen 07 des Lichtleiterelements 01 gebildet, welche die Aussparung 04 begrenzen. Das von mindestens einer Lichtquelle an zumindest einer Lichteinkoppelpartie 02 in das Lichtleiterelement 01 eingestrahlte Licht wird in dessen Strahlengang S zur Lichtauskoppelpartie 03 zumindest beim Übergang aus dem Lichtleiterelement 01 in die von diesem zumindest zum Teil umgebene Aussparung 04 an einer ersten optischen Grenzfläche 05 und beim Übergang aus der Aussparung 04 in das Lichtleiterelement 01 an einer zweiten optischen Grenzfläche 06 gebrochen, bevor es beim Austritt aus dem Lichtleiterelement 01 an der Lichtauskoppelpartie 03 vorzugsweise noch einmal gebrochen wird.

Die mindestens eine Aussparung 04 ist vorzugsweise zumindest teilweise von Luft eingenommen. Alternativ können eine oder mehrere Aussparungen von einem anderen, eine bestimmte gewünschte Lichtbrechung mit dem Material des Lichtleiterelements begünstigenden Stoff zumindest teilweise eingenommen sein.

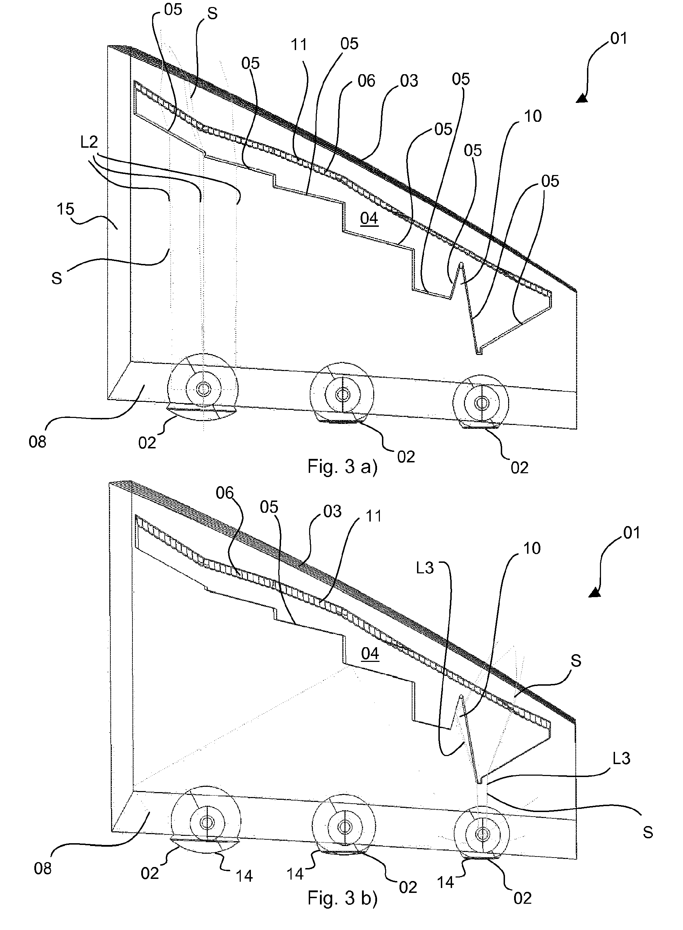

Die Lichtführung innerhalb zumindest eines Teils des Lichtleiterelements 01 kann vermittels Totalreflexion (TIR; Total Internal Reflexion) erfolgen. Beispielsweise kann wie in Fig. 2 dargestellt an einer mindestens einer Lichtauskoppelpartie 03 gegenüberliegenden Seite 08 des Lichtleiterelements 01 mindestens ein Keil 09 vorgesehen sein, welcher in dessen Richtung gestreutes und/oder gelenktes Licht vermittels Totalreflexion in Richtung mindestens einer Lichtauskoppelpartie 03 umlenkt. Zwischen dem Keil 09 und der Seite 08 kann ein Freiraum 12 verbleiben, welcher durch optische Grenzflächen begrenzt ebenfalls der Lichtbrechung zum Erhalt einer gewünschten Lichtverteilung beitragen kann. Der Freiraum 12 kann dabei eine alternative oder zusätzliche, ebenfalls im Strahlengang S liegende Aussparung bilden. Alternativ oder zusätzlich kann innerhalb mindestens einer Aussparung 04 und/oder wie in den Fig. 1 und Fig. 3 dargestellt an wenigstens einer mindestens eine Aussparung 04 begrenzenden optischen Grenzfläche 05 wenigstens ein TIR-Optikkeil 10 angeordnet sein.

Mindestens eine erste optische Grenzfläche 05 und/oder mindestens eine zweite optische Grenzfläche 06 kann wie in Fig. 1 und Fig. 3 dargestellt zumindest zum Teil mit einer mit einer optischen Struktur 11 versehen sein. Bei der optischen Struktur 11 kann es sich beispielsweise um eine oder mehrere spezielle Optiken handeln, beispielsweise eine Kissen- und/oder Walzenoptik. Die Kissen und/oder Walzen der optischen Struktur 11 können horizontal und/oder vertikal und/oder unter einem Winkel angeordnet sein. Wichtig ist hervorzuheben, dass auch zumindest abschnittsweise ebene Flächen als optische Struktur 11 in Frage kommen, ebenso wie Freiformflächen, um bestimmte Lichtverteilungen zu erhalten.

Mindestens eine Aussparung 04 kann von mehreren Seiten vom Lichtleiterelement umgeben sein. Vorzugsweise ist mindestens eine Aussparung 04 wie in den Fig. 1 und Fig. 3 dargestellt zumindest innerhalb einer mehrere Lichtausbreitungsrichtungen L1, L2, L3 umfassenden Fläche allseitig vom Lichtleiterelement 01 umschlossen. Die Fläche kann beispielsweise eine Ebene sein oder umfassen.

Die mindestens eine Lichteinkoppelpartie 02 kann mindestens eine ebene Fläche 13 umfassen. Alternativ oder zusätzlich kann mindestens eine Lichteinkoppelpartie 02 einen Compound Parabolic Concentrator (CPC) 14 umfassen.

Wichtig ist hervorzuheben, dass das Lichtleiterelement 01 bevorzugt in einem Spritzgussverfahren hergestellt wird. Hierdurch werden die Außenflächen 15 des Lichtleiterelements 01 und die optischen Grenzflächen 05, 06 der Aussparung 04 durch eine Spritzgussform bestimmt, wodurch Toleranzen, wie bei einem Herstellungsprozess durch z.B. Fräsen und anschließendes Polieren ausgeschlossen werden können.

Ebenso wichtig ist hervorzuheben, dass mindestens einer Lichteinkoppelpartie 02 ein Lichtleiterelement vorgesetzt sein kann, beispielsweise in Form eines Prismas, vermittels dem das von einer oder mehreren Lichtquellen kommende Licht erstmalig beispielsweise unter Totalreflexion in mindestens eine Lichteinkoppelpartie umgelenkt wird.

Die Erfindung ist insbesondere im Bereich der Herstellung von Kraftfahrzeugleuchten sowie von optischen Komponenten für Kraftfahrzeugleuchten gewerblich anwendbar.

**Bezugszeichenliste**

01 Lichtleiterelement

02 Lichteinkoppelpartie

03 Lichtauskoppelpartie

04 Aussparung

05 erste optische Grenzfläche

06 zweite optische Grenzfläche

07 Oberfläche

08 Seite

09 Keil

10 TIR-Optikkeil

11 optische Struktur

12 Freiraum

13 ebene Fläche

14 Compound Parabolic Concentrator (CPC)

15 Außenfläche

L1 Lichtausbreitungsrichtung

L2 Lichtausbreitungsrichtung

L3 Lichtausbreitungsrichtung

S Strahlengang des Lichts

**Patentansprüche**

1. Lichtleiterelement (01) für eine Kraftfahrzeugleuchte mit mindestens einer Lichteinkoppelpartie (02) und mindestens einer von der Lichteinkoppelpartie (02) verschiedenen Lichtauskoppelpartie (03),
**gekennzeichnet durch**
mindestens eine im Strahlengang (S) des Lichts zwischen mindestens einer Lichteinkoppelpartie (02) und mindestens einer Lichtauskoppelpartie (03) vorgesehene und in und entgegen zumindest einer Lichtausbreitungsrichtung (L1, L2, L3) **durch** wenigstens eine erste optische Grenzfläche (05) und zumindest eine zweite optische Grenzfläche (06) begrenzte Aussparung (04, 12) zur Lichtlenkung, wobei an mindestens einer Lichteinkoppelpartie (02) eingestrahltes Licht in dessen Strahlengang (S) zu mindestens einer Lichtauskoppelpartie (03) zumindest an wenigstens einer ersten optischen Grenzfläche (05) und an zumindest einer zweiten optischen Grenzfläche (06) gebrochen wird.

2. Lichtleiterelement nach Anspruch 1,
**dadurch gekennzeichnet,**
**dass** die Lichtführung innerhalb zumindest eines Teils des Lichtleiterelements (01) vermittels Totalreflexion (TIR; Total Internal Reflexion) erfolgt.

3. Lichtleiterelement nach Anspruch 1 oder 2,
**dadurch gekennzeichnet,**
**dass** an einer mindestens einer Lichtauskoppelpartie (03) gegenüberliegenden Seite (08) des Lichtleiterelements (01) mindestens ein Keil (09) vorgesehen ist, welcher in dessen Richtung gestreutes Licht vermittels Totalreflexion (TIR; Total Internal Reflexion) in Richtung mindestens einer Lichtauskoppelpartie (03) umlenkt.

**4.** Lichtleiterelement nach Anspruch 1, 2 oder 3, **gekennzeichnet durch**
mindestens zwei im Strahlengang (S) des Lichts hintereinander angeordnete Ausnehmungen (04).

**5.** Lichtleiterelement nach einem der vorhergehenden Ansprüche,
**gekennzeichnet durch**
mindestens eine im Strahlengang (S) des Lichts zwischen der ersten optischen Grenzfläche (05) und der zweiten optischen Grenzfläche (06) vorgesehene weitere optische Grenzfläche.

**6.** Lichtleiterelement nach einem der vorhergehenden Ansprüche,
**dadurch gekennzeichnet,**
**dass** mindestens eine erste optische Grenzfläche (05) und/oder mindestens eine zweite optische Grenzfläche (06) zumindest teilweise mit einer optischen Struktur (11) versehen ist.

**7.** Lichtleiterelement nach Anspruch 6,
**dadurch gekennzeichnet,**
**dass** die optische Struktur (11) wenigstens eine spezielle Optik umfasst, vorzugsweise mindestens eine Kissen- und/oder Walzenoptik.

**8.** Lichtleiterelement nach einem der vorhergehenden Ansprüche,
**dadurch gekennzeichnet,**
**dass** innerhalb mindestens einer Aussparung (04, 12) und/oder an wenigstens einer mindestens eine Aussparung (04) begrenzenden optischen Grenzfläche (05, 06) wenigstens ein TIR-Optikkeil (10) angeordnet ist.

**9.** Lichtleiterelement nach einem der vorhergehenden Ansprüche,
**dadurch gekennzeichnet,**
**dass** mindestens eine Aussparung (04, 12) von mehreren Seiten vom Lichtleiterelement (01) umgeben ist.

**10.** Lichtleiterelement nach Anspruch 9,
**dadurch gekennzeichnet,**
**dass** mindestens eine Aussparung (04) zumindest innerhalb einer mehrere Lichtausbreitungsrichtungen (L1, L2, L3) zwischen der mindestens einen Lichteinkoppelpartie (02) und der mindestens einen Lichtauskoppelpartie (03) umfassenden Fläche allseitig vom Lichtleiterelement (01) umschlossen ist.

**11.** Lichtleiterelement nach einem der vorhergehenden Ansprüche,
**dadurch gekennzeichnet,**
**dass** zur Lichteinkopplung in das Lichtleiterelement (01) wenigstens eine LED und/oder wenigstens ein LED-Chip vorgesehen ist.

**12.** Lichtleiterelement nach Anspruch 11,
**dadurch gekennzeichnet,**
**dass** das Lichtleiterelement (01) an wenigstens eine LED und/oder wenigstens einen LED-Chip angespritzt ist.

**13.** Lichtleiterelement nach einem der vorhergehenden Ansprüche,
**gekennzeichnet durch**
mindestens eine eine ebene Fläche (13) umfassende Lichteinkoppelpartie (02).

**14.** Lichtleiterelement nach einem der vorhergehenden Ansprüche,
**gekennzeichnet durch**
mindestens eine einen Compound Parabolic Concentrator (14) umfassende Lichteinkoppelpartie (02).

**15.** Lichtleiterelement nach einem der vorhergehenden Ansprüche,
**dadurch gekennzeichnet,**
**dass** es sich bei dem die Aussparung (04, 12) einnehmenden Stoff um Luft handelt.

Fig. 1

Fig. 2

Fig. 3 a)

Fig. 3 b)

**EP 2 530 372 A1**

Europäisches
Patentamt

European
Patent Office

Office européen
des brevets

# EUROPÄISCHER RECHERCHENBERICHT

**Nummer der Anmeldung**

EP 11 16 8130

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 059958 A1 (AUTOMOTIVE LIGHTING REUTLINGEN [DE]) 28. Juni 2007 (2007-06-28) * das ganze Dokument * ----- | 1-15 | INV. F21S8/12 F21S8/10 G02B6/00 |
| X | US 2007/121338 A1 (WU HSIANG-CHEN [TW]) 31. Mai 2007 (2007-05-31) * das ganze Dokument * ----- | 1-15 | |
| X | FR 2 871 551 A1 (VALEO VISION SA [FR]) 16. Dezember 2005 (2005-12-16) * das ganze Dokument * ----- | 1-15 | |
| X | US 6 582 103 B1 (POPOVICH JOHN [US] ET AL) 24. Juni 2003 (2003-06-24) * Zusammenfassung; Abbildungen 9-13 * ----- | 1-15 | |
| A | EP 2 071 228 A2 (KOITO MFG CO LTD [JP]) 17. Juni 2009 (2009-06-17) * Zusammenfassung; Abbildungen * ----- | 1-15 | |
| A | EP 1 167 870 A2 (HELLA KG HUECK & CO [DE]) 2. Januar 2002 (2002-01-02) * Zusammenfassung; Abbildungen * ----- | 1-15 | RECHERCHIERTE SACHGEBIETE (IPC) F21S G02B F21V |
| A | US 6 097 549 A (JENKINS DAVID [US] ET AL) 1. August 2000 (2000-08-01) * Zusammenfassung; Abbildungen * ----- | 1-15 | |
| A | EP 1 726 479 A2 (VALEO VISION [FR]) 29. November 2006 (2006-11-29) * Zusammenfassung; Abbildungen * ----- | 1-15 | |

Der vorliegende Recherchenbericht wurde für alle Patentansprüche erstellt

| Recherchenort | Abschlußdatum der Recherche | Prüfer |
|---|---|---|
| München | 29. November 2011 | Panatsas, Adam |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

    ............................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 11 16 8130

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-11-2011

| Im Recherchenbericht angeführtes Patentdokument | Datum der Veröffentlichung | Mitglied(er) der Patentfamilie | Datum der Veröffentlichung |
|---|---|---|---|
| DE 102005059958 A1 | 28-06-2007 | DE 102005059958 A1<br>US 2007147059 A1 | 28-06-2007<br>28-06-2007 |
| US 2007121338 A1 | 31-05-2007 | KEINE | |
| FR 2871551 A1 | 16-12-2005 | KEINE | |
| US 6582103 B1 | 24-06-2003 | KEINE | |
| EP 2071228 A2 | 17-06-2009 | CN 101457892 A<br>EP 2071228 A2<br>JP 2009146722 A<br>KR 20090064326 A<br>US 2009154186 A1 | 17-06-2009<br>17-06-2009<br>02-07-2009<br>18-06-2009<br>18-06-2009 |
| EP 1167870 A2 | 02-01-2002 | EP 1167869 A2<br>EP 1167870 A2 | 02-01-2002<br>02-01-2002 |
| US 6097549 A | 01-08-2000 | KEINE | |
| EP 1726479 A2 | 29-11-2006 | EP 1726479 A2<br>FR 2886237 A1<br>US 2006268564 A1 | 29-11-2006<br>01-12-2006<br>30-11-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60205806 T2
- DE 102006034070 A1

- EP 1881258 A1